(19)

**Europäisches Patentamt**
**European Patent Office**
**Office européen des brevets**

(11) **EP 3 562 154 A1**

(12) **EUROPEAN PATENT APPLICATION**
published in accordance with Art. 153(4) EPC

(43) Date of publication:
**30.10.2019 Bulletin 2019/44**

(21) Application number: **17889238.6**

(22) Date of filing: **15.11.2017**

(51) Int Cl.:
*H04N 19/13* (2014.01)  *H04N 19/157* (2014.01)
*H04N 19/176* (2014.01)  *H04N 19/70* (2014.01)
*H04N 19/96* (2014.01)

(86) International application number:
**PCT/JP2017/041084**

(87) International publication number:
**WO 2018/123313 (05.07.2018 Gazette 2018/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **26.12.2016 JP 2016251290**

(71) Applicant: **NEC Corporation**
**Tokyo 108-8001 (JP)**

(72) Inventor: **CHONO, Keiichi**
**Tokyo 108-8001 (JP)**

(74) Representative: **Betten & Resch**
**Patent- und Rechtsanwälte PartGmbB**
**Maximiliansplatz 14**
**80333 München (DE)**

(54) **IMAGE ENCODING METHOD, IMAGE DECODING METHOD, IMAGE ENCODING DEVICE, IMAGE DECODING DEVICE AND PROGRAM**

(57) A video encoding device 10 includes: an quadtree split flag encoding unit 11 for entropy-encoding a flag indicating whether or not a block is partitioned based on a quadtree structure; a skip flag encoding unit 12 for entropy-encoding a skip flag of an end node in a quadtree structure; a binary tree information encoding unit 13 for entropy-encoding a flag indicating whether or not a block of the end node in the quadtree structure is partitioned based on a binary tree structure and a horizontal/vertical splitting direction flag indicating a splitting direction; and a size multiplexing unit 14 for multiplexing information indicating a minimum size of partitioning based on the binary tree structure, in a bitstream, wherein in the case where a node of a size equal to the minimum size is further partitioned based on the binary tree structure, the binary tree information encoding unit 13 does not entropy-encode the horizontal/vertical splitting direction flag at the node.

FIG. 2

EP 3 562 154 A1

**Description**

**Technical Field**

The present invention relates to a video coding technique using a block partitioning structure based on a quadtree and a binary tree.

**Background Art**

In a video coding system described in Non Patent Literature 1, each frame of digitized video is split into coding tree units (CTUs), and each CTU is encoded in raster scan order.

Each CTU is split into coding units (CUs) and encoded, in a quadtree structure. Each CU is split into prediction units (PUs) and prediction-encoded. Prediction encoding includes intra prediction and inter-frame prediction.

A prediction error of each CU is split into transform units (TUs) and transform-encoded based on frequency transform, in a quadtree structure.

A CU of the largest size is referred to as a largest CU (largest coding unit: LCU), and a CU of the smallest size is referred to as a smallest CU (smallest coding unit: SCU). The LCU size and the CTU size are the same.

The following describes intra prediction and inter-frame prediction, and signaling of CTU, CU, PU, and TU.

Intra prediction is prediction for generating a prediction image from a reconstructed image having the same display time as a frame to be encoded. Non Patent Literature 1 defines 33 types of angular intra prediction depicted in Fig. 9. In angular intra prediction, a reconstructed pixel near a block to be encoded is used for extrapolation in any of 33 directions, to generate an intra prediction signal. In addition to 33 types of angular intra prediction, Non Patent Literature 1 defines DC intra prediction for averaging reconstructed pixels near the block to be encoded, and planar intra prediction for linear interpolating reconstructed pixels near the block to be encoded. A CU encoded based on intra prediction is hereafter referred to as intra CU.

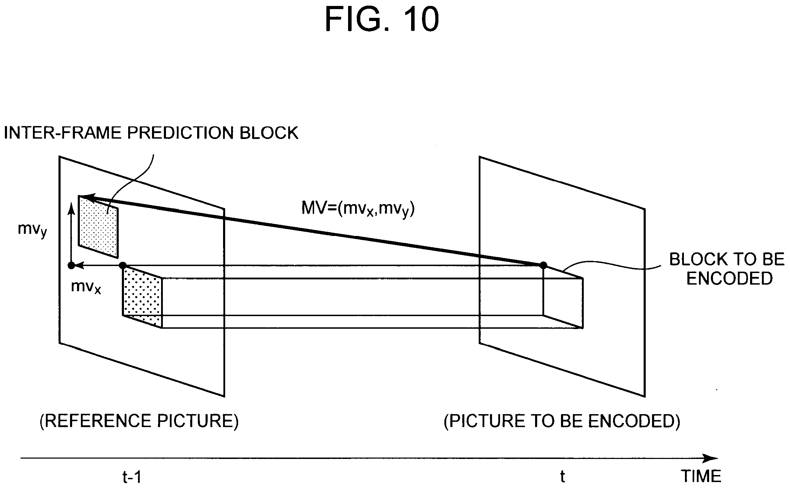

Inter-frame prediction is prediction for generating a prediction image from a reconstructed image (reference picture) different in display time from a frame to be encoded. Inter-frame prediction is hereafter also referred to as inter prediction. Fig. 10 is an explanatory diagram depicting an example of inter-frame prediction. A motion vector MV = ($mv_x$, $mv_y$) indicates the amount of translation of a reconstructed image block of a reference picture relative to a block to be encoded. In inter prediction, an inter prediction signal is generated based on a reconstructed image block of a reference picture (using pixel interpolation if necessary). A CU encoded based on inter-frame prediction is hereafter referred to as "inter CU".

A frame encoded including only intra CUs is called "I frame" (or "I picture"). A frame encoded including not only intra CUs but also inter CUs is called "P frame" (or "P picture"). A frame encoded including inter CUs that each use not only one reference picture but two reference pictures simultaneously for the inter prediction of the block is called "B frame" (or "B picture").

Skip mode indicates that a CU to be processed is prediction-encoded by frame prediction based on 2N × 2N shape of the below-mentioned PU partitioning shape and the below-mentioned transform quantization value is not present. Whether or not each CU is skip mode is signaled by skip_flag syntax described in Non Patent Literature 1.

Whether each CU that is not skip mode is an intra CU or an inter CU is signaled by pred_mode_flag syntax described in Non Patent Literature 1.

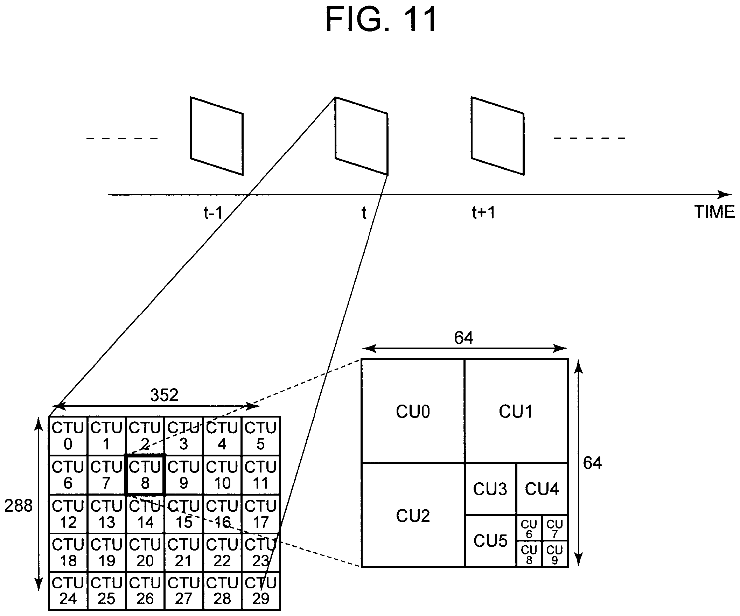

Fig. 11 is an explanatory diagram depicting an example of CTU partitioning of a frame t and an example of CU partitioning of the eighth CTU (CTU8) included in the frame t, in the case where the spatial resolution of the frame is the common intermediate format (CIF) and the CTU size is 64.

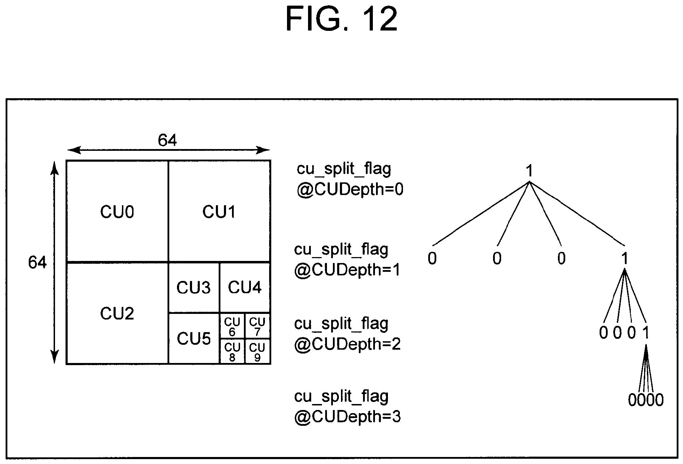

Fig. 12 is an explanatory diagram depicting a quadtree structure corresponding to the example of CU partitioning of CTU8. The quadtree structure, i.e. the CU partitioning shape, of each CTU is signaled by cu_split_flag syntax described in Non Patent Literature 1.

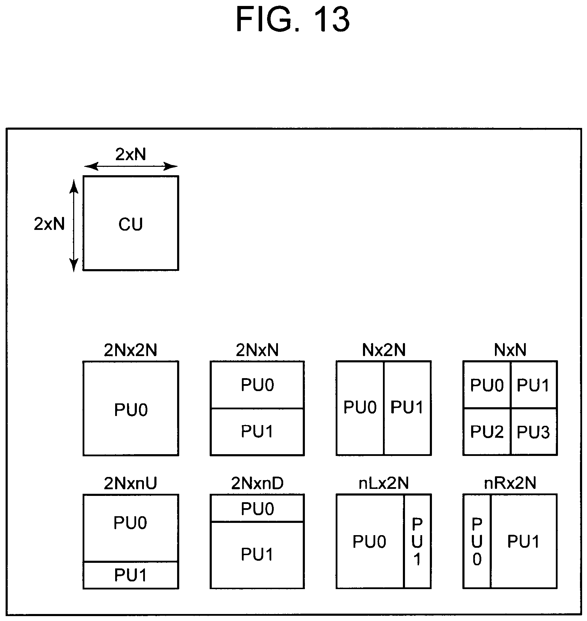

Fig. 13 is an explanatory diagram depicting PU partitioning shapes of a CU. In the case where the CU is an intra CU, square PU partitioning is selectable. In the case where the CU is an inter CU, not only square but also rectangular PU partitioning is selectable. The PU partitioning shape of each CU is signaled by part mode syntax described in Non Patent Literature 1.

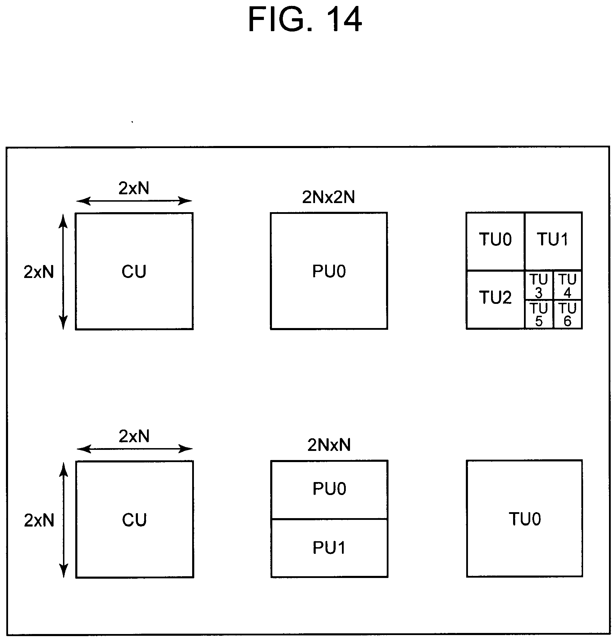

Fig. 14 is an explanatory diagram depicting examples of TU partitioning of a CU. An example of TU partitioning of an intra CU having a 2N×2N PU partitioning shape is depicted in the upper part of the drawing. In the case where the CU is an intra CU, the root of the quadtree is located in the PU, and the prediction error of each PU is expressed by the quadtree structure. An example of TU partitioning of an inter CU having a 2N×N PU partitioning shape is depicted in the lower part of the drawing. In the case where the CU is an inter CU, the root of the quadtree is located in the CU, and the prediction error of the CU is expressed by the quadtree structure. The quadtree structure of the prediction error, i.e. the TU partitioning shape of each CU, is signaled by split_tu_flag syntax described in Non Patent Literature 1.

This completes the description of intra prediction and inter-frame prediction, and signaling of CTU, CU, PU, and TU.

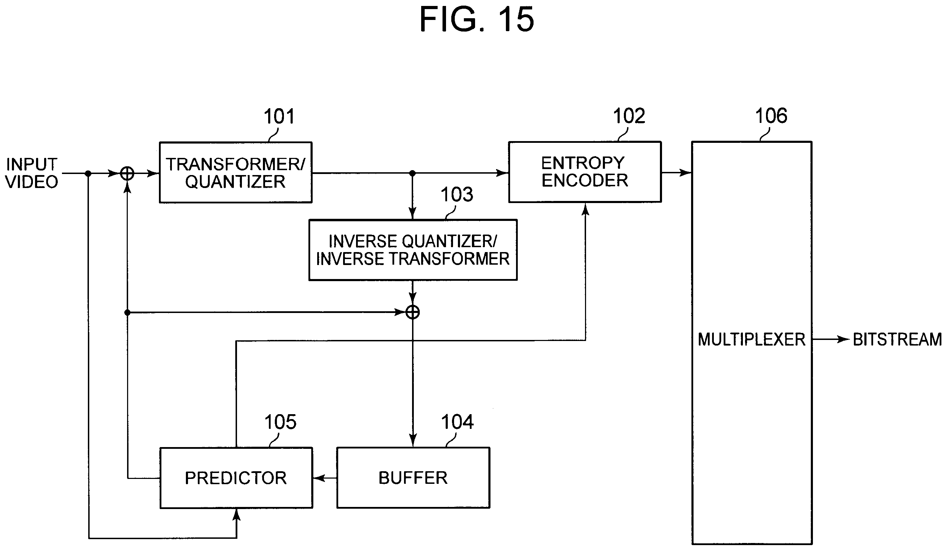

The following describes the structure and operation of a typical video encoding device that receives each CU of each frame of digitized video as an input image and outputs a bitstream, with reference to a block diagram in Fig. 15.

A video encoding device depicted in Fig. 15 includes a transformer/quantizer 101, an entropy encoder 102, an inverse quantizer/inverse transformer 103, a buffer 104, a predictor 105, and a multiplexer 106.

The predictor 105 determines, for each CTU, a cu split flag syntax value for determining a CU partitioning shape that minimizes the coding cost.

The predictor 105 then determines, for each CU, a pred_mode_flag syntax value for determining intra prediction/inter prediction, a part_mode syntax value for determining a PU partitioning shape, a split_tu_flag syntax value for determining a TU partitioning shape, an intra prediction direction, and a motion vector that minimize the coding cost.

The predictor 105 further determines a skip_flag syntax value for determining skip mode.

In detail, in the case where, for the CU to be processed, the determined pred_mode_flag indicates inter prediction, the determined part mode indicates 2N × 2N, and the below-mentioned transform quantization value is not present, the predictor 105 sets skip_flag to 1 (i.e. skip mode is set). Otherwise, the predictor 105 sets skip_flag to 0 (i.e. skip mode is not set).

The predictor 105 generates a prediction signal corresponding to the input image signal of each CU, based on the determined cu_split_flag syntax value, pred_mode_flag syntax value, part_mode syntax value, split_tu_flag syntax value, intra prediction direction, motion vector, etc. The prediction signal is generated based on the above-mentioned intra prediction or inter-frame prediction.

The transformer/quantizer 101 frequency-transforms a prediction error image obtained by subtracting the prediction signal from the input image signal, based on the TU partitioning shape determined by the predictor 105.

The transformer/quantizer 101 further quantizes the frequency-transformed prediction error image (frequency transform coefficient). The quantized frequency transform coefficient is hereafter referred to as "transform quantization value".

The entropy encoder 102 entropy-encodes the cu_split_flag syntax value, the skip_flag syntax value, the pred_mode_flag syntax value, the part_mode syntax value, the split_tu_flag syntax value, the difference information of the intra prediction direction, and the difference information of the motion vector determined by the predictor 105 (these prediction-related information are hereafter also referred to as "prediction parameters"), and the transform quantization value.

The inverse quantizer/inverse transformer 103 inverse-quantizes the transform quantization value. The inverse quantizer/inverse transformer 103 further inverse-frequency-transforms the frequency transform coefficient obtained by the inverse quantization. The prediction signal is added to the reconstructed prediction error image obtained by the inverse frequency transform, and the result is supplied to the buffer 104. The buffer 104 stores the reconstructed image.

The multiplexer 106 multiplexes and outputs the entropy-encoded data supplied from the entropy encoder 102, as a bitstream.

The typical video encoding device generates a bitstream by the operation described above.

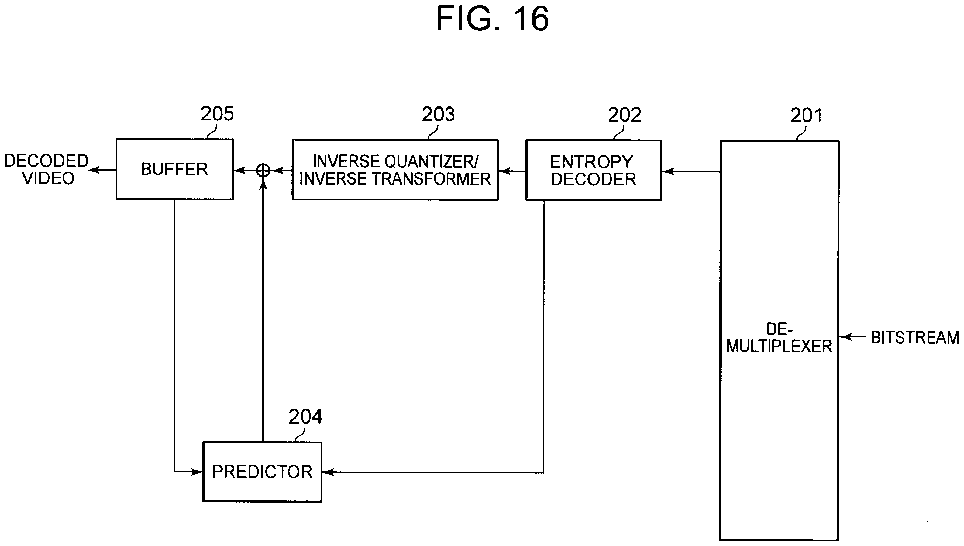

The following describes the structure and operation of a typical video decoding device that receives a bitstream as input and outputs a decoded video frame, with reference to Fig. 16.

A video decoding device depicted in Fig. 16 includes a de-multiplexer 201, an entropy decoder 202, an inverse quantizer/inverse transformer 203, a predictor 204, and a buffer 205.

The de-multiplexer 201 de-multiplexes an input bitstream to extract an entropy-encoded video bitstream.

The entropy decoder 202 entropy-decodes the video bitstream. The entropy decoder 202 entropy-decodes the prediction parameters and the transform quantization value, and supplies them to the inverse quantizer/inverse transformer 203 and the predictor 204.

The inverse quantizer/inverse transformer 203 inverse-quantizes the transform quantization value. The inverse quantizer/inverse transformer 203 further inverse-frequency-transforms the frequency transform coefficient obtained by the inverse quantization.

After the inverse frequency transform, the predictor 204 generates a prediction signal using a reconstructed image stored in the buffer 205, based on the entropy-decoded prediction parameters.

After the prediction signal is generated, the prediction signal supplied from the predictor 204 is added to the reconstructed prediction error image obtained by the inverse frequency transform by the inverse quantizer/inverse transformer 203, and the result is supplied to the buffer 205 as a reconstructed image.

The reconstructed image stored in the buffer 205 is then output as a decoded image (decoded video).

The typical video decoding device generates a decoded image by the operation described above.

Non Patent Literature 2 discloses a video coding technique using a block partitioning structure based on a quadtree and a binary tree (BT), which is called QuadTree plus Binary Tree (QTBT) and is an extension to the above-mentioned system described in Non Patent Literature 1.

In a QTBT structure, a coding tree unit (CTU) is recursively split into square coding units (CUs) based on a quadtree structure. Each recursively split CU is further recursively split into rectangular or square blocks based on a binary tree structure, for a prediction process or a transform process. In the QTBT structure, part_mode syntax is not used.

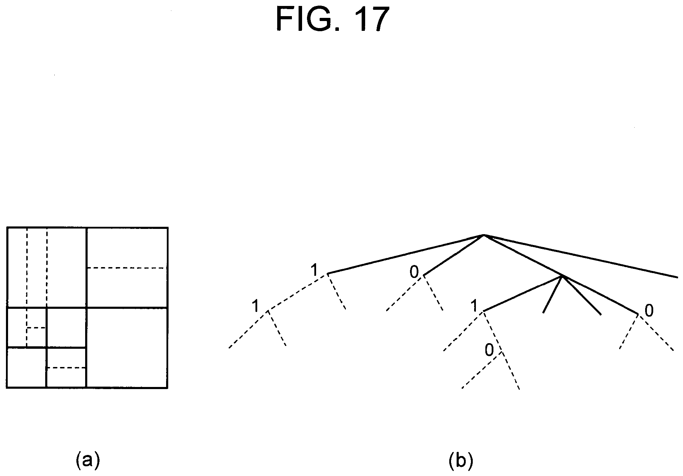

Fig. 17 is an explanatory diagram depicting the QTBT structure described in Non Patent Literature 2. An example of block partitioning of a CTU is shown in (a) of Fig. 17, and its tree structure is shown in (b) of Fig. 17. In Fig. 17, each solid line indicates partitioning based on the quadtree structure, and each dashed line indicates partitioning based on the binary tree structure. In partitioning based on the binary tree structure, rectangular blocks are allowed, so that information indicating the splitting direction (the direction in which the splitting line extends) is necessary. In (b) of Fig. 17, 0 indicates splitting in the horizontal direction, and 1 indicates splitting in the vertical direction. The QTBT structure can express rectangular partitioning shapes more flexibly, and thus enhance the compression efficiency of the video system based on the block partitioning structure described in Non Patent Literature 1.

**Citation List**

**Non Patent Literatures**

NPL 1: High Efficiency Video Coding (HEVC) text specification draft 10 (for FDIS & Last Call) of ITU-T SG16 WP3 and ISO/IEC JTC1/SC29/WG11 12th Meeting: Geneva, CH, 14-23 January 2013
NPL 2: Jicheng An, et al., "Quadtree plus binary tree structure integration with JEM tools", JVET-B0023, Joint Video Exploration Team (JVET) of ITU-T SG 16 WP 3 and ISO/IEC JTC 1/SC 29/WG 11 2nd Meeting: San Diego, USA, 20-26 February 2016

**Summary of Invention**

**Technical Problem**

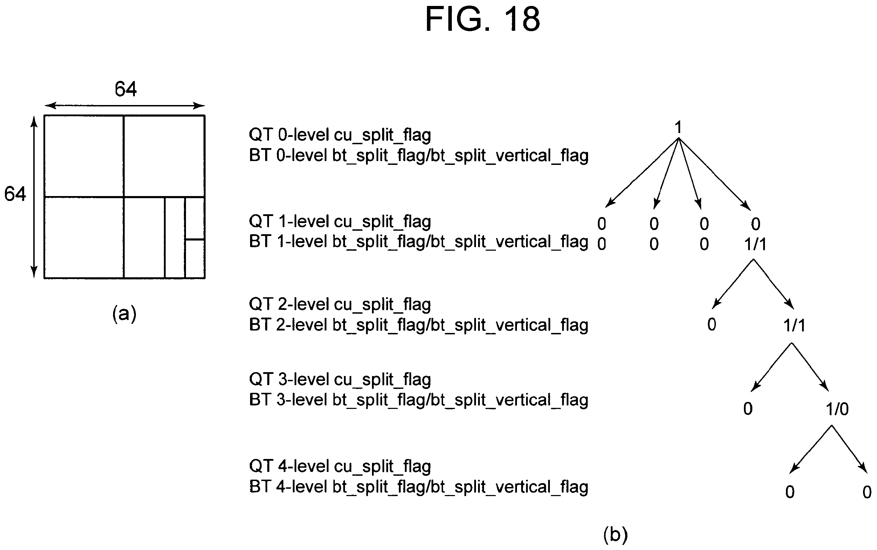

Fig. 18 is an explanatory diagram depicting an example of block partitioning of a CTU based on the QTBT structure and its tree structure.

The definitions of cu_split_flag, bt_split_flag, and bt_split_vertical_flag used in Fig. 18 are described first.

cu_split_flag indicates whether or not partitioning based on the quadtree structure is performed. When cu_split_flag is 0, partitioning based on the quadtree structure is not performed (i.e. the block is a block of an end node in quadtree structure). When cu split flag is 1, partitioning based on the quadtree structure is performed.

bt_split_flag indicates whether or not partitioning based on the binary tree structure is performed. When bt split_flag is 0, partitioning based on the binary tree structure is not performed (i.e. the block is a block of an end node in binary tree structure). When bt_split_flag is 1, partitioning based on the binary tree structure is performed.

bt_split_vertical_flag is present when bt_split_flag is 1. bt_split_vertical flag indicates the splitting direction. When bt_split_vertical_flag is 0, splitting is performed in the horizontal direction. When bt_split_vertical_flag is 1, splitting is performed in the vertical direction.

An example of block partitioning is shown in (a) of Fig. 18. In (b) of Fig. 18, the syntax elements and QTBT structure, which corresponds to the partitioning is shown in (a) of Fig. 18, is shown.

In the example depicted in (a) of Fig. 18, a $64 \times 64$ (64 pixels $\times$ 64 pixels) block is split into four $32 \times 32$ blocks based on the quadtree structure. Accordingly, at QT 0-level (depth 0), the cu_split_flag value indicates partitioning (1 in this example).

At QT 1-level (depth 1), the lower right $32 \times 32$ block is split into two in the vertical direction. For the $32 \times 32$ block, the cu_split_flag value indicates non-partitioning (0 in this example), but the bt_split_flag value at BT 1-level (depth 1) indicates partitioning (1 in this example). Moreover, the bt_split_vertical flag value indicates the vertical direction (1 in this example). For the other three $32 \times 32$ blocks, the bt_split_flag value relating to the binary tree structure indicates non-partitioning (0 in this example).

At BT 2-level (depth 2), for the left $16 \times 32$ block included in the lower right $32 \times 32$ block, the bt_split_flag value indicates non-partitioning (0 in this example), as the block is subjected to no more partitioning.

For the right $16 \times 32$ block, the bt_split_flag value indicates partitioning (1 in this example), as the block is subjected to further partitioning. The bt_split_vertical flag value indicates the vertical direction (1 in this example).

At BT 3-level (depth 3), the left $8 \times 32$ block included in the lower right $16 \times 32$ block is not subjected to partitioning, so that the bt_split_flag value indicates non-partitioning (0 in this example). The right $8 \times 32$ block included in the lower right $16 \times 32$ block is subjected to partitioning, so that the bt_split_flag value indicates partitioning (1 in this example). The bt_split_vertical_flag value indicates the horizontal direction (0 in this example).

The upper 8 × 16 block and the lower 8 × 16 block included in the lower right 8 × 32 block are both not subjected to partitioning. Accordingly, for each of the blocks, the bt_split_flag value indicates non-partitioning (0 in this example).

When using the above-mentioned QTBT structure, block partitioning/non-partitioning information based on the binary tree (hereafter referred to as "binary tree split flag") and horizontal/vertical splitting direction information (hereafter referred to as "binary tree split direction flag") need to be transmitted in addition to block partitioning/non-partitioning information based on the quadtree (hereafter referred to as "quadtree split flag").

Since the binary tree split flag and the binary tree split direction flag are transmitted for each block, the number of bits increases significantly especially under a low bitrate condition.

Thus, these flag information incurs overhead code amount and causes a decrease in compression efficiency, and also causes an increase in entropy encoding/decoding processing amount.

In the case of using the QTBT structure, the minimum block size can be set. The minimum size is a concept including both the minimum width and the minimum height. Suppose the minimum size is set to "N". If the width (the number of pixels in the horizontal direction) of the block reaches N, the block cannot be further split in the vertical direction. This is because such spliting results in a width of N/2. If the height ((the number of pixels in the vertical direction) of the block reaches N, the block cannot be further split in the horizontal direction. This is because such splitting results in a height of N/2.

Thus, in the case of splitting a block whose width or height is the minimum size based on binary tree partitioning, the splitting direction is uniquely determined. In the system depicted in (b) of Fig. 18, however, unnecessary (i.e. redundant) bt_split_vertical_flag is transmitted even in such a case.

The present invention has an object of improving compression performance and reducing the entropy encoding processing quantity and entropy decoding processing quantity in a video encoding process and video decoding process that use a block partitioning structure based on a quadtree and a binary tree.

**Solution to Problem**

A video encoding method according to the present invention is a video encoding method using a block partitioning structure based on a quadtree and a binary tree, the video encoding method comprising: a step of entropy-encoding a flag indicating whether or not a block is partitioned based on a quadtree structure; a step of entropy-encoding a skip flag of an end node in a quadtree structure; a step of entropy-encoding a flag indicating whether or not a block of the end node in the quadtree structure is partitioned based on a binary tree structure and a horizontal/vertical splitting direction flag indicating a splitting direction; and a step of multiplexing information indicating a minimum size of partitioning based on the binary tree structure, in a bitstream, wherein in the case where a node of a size equal to the minimum size is further partitioned based on the binary tree structure, the horizontal/vertical splitting direction flag at the node is not entropy-encoded.

A video decoding method according to the present invention is a video decoding method using a block partitioning structure based on a quadtree and a binary tree, the video decoding method comprising: a step of entropy-decoding a skip flag of an end node in a quadtree structure; a step of entropy-decoding a flag indicating whether or not a block of the end node in quadtree structure is partitioned based on a binary tree structure and a horizontal/vertical splitting direction flag indicating a splitting direction; and a step of extracting information indicating a minimum size of partitioning based on the binary tree structure, from a bitstream, wherein in the case where a node of a size equal to the minimum size is further partitioned based on the binary tree structure, the horizontal/vertical splitting direction flag at the node is not entropy-decoded.

A video encoding device according to the present invention is a video encoding device using a block partitioning structure based on a quadtree and a binary tree, the video encoding device comprising: quadtree split flag encoding means for entropy-encoding a flag indicating whether or not a block is partitioned based on a quadtree structure; skip flag encoding means for entropy-encoding a skip flag of an end node in a quadtree structure; binary tree information encoding means for entropy-encoding a flag indicating whether or not a block of the end node in the quadtree structure is partitioned based on a binary tree structure and a horizontal/vertical splitting direction flag indicating a splitting direction; and size multiplexing means for multiplexing information indicating a minimum size of partitioning based on the binary tree structure, in a bitstream, wherein in the case where a node of a size equal to the minimum size is further partitioned based on the binary tree structure, the binary tree information encoding means does not entropy-encode the horizontal/vertical splitting direction flag at the node.

A video decoding device according to the present invention is a video decoding device using a block partitioning structure based on a quadtree and a binary tree, the video decoding device comprising: skip flag decoding means for entropy-decoding a skip flag of an end node in a quadtree structure; binary tree information decoding means for entropy-decoding a flag indicating whether or not a block of the end node in the quadtree structure is partitioned based on a binary tree structure and a horizontal/vertical splitting direction flag indicating a splitting direction; and size extraction means for extracting information indicating a minimum size of partitioning based on the binary tree structure, from a bitstream, wherein in the case where a node of a size equal to the minimum size is further partitioned based on the binary tree structure, the binary tree information decoding means does not entropy-decode the horizontal/vertical splitting direction flag at the node.

A video encoding program according to the present invention is a video encoding program for executing a video encoding method using a block partitioning structure based on a quadtree and a binary tree, the video encoding program causing a computer to execute: a process of entropy-encoding a flag indicating whether or not a block is partitioned based on a quadtree structure; a process of entropy-encoding a skip flag of an end node in a quadtree structure; a process of entropy-encoding a flag indicating whether or not a block of the end node in the quadtree structure is partitioned based on a binary tree structure and a horizontal/vertical splitting direction flag indicating a splitting direction; and a process of multiplexing information indicating a minimum size of partitioning based on the binary tree structure, in a bitstream, wherein in the case where a node of a size equal to the minimum size is further partitioned based on the binary tree structure, the horizontal/vertical splitting direction flag at the node is not entropy-encoded.

A video decoding program according to the present invention is a video decoding program for executing a video decoding method using a block partitioning structure based on a quadtree and a binary tree, the video decoding program causing a computer to execute: a process of entropy-decoding a skip flag of an end node in a quadtree structure; a process of entropy-decoding a flag indicating whether or not a block of the end node in the quadtree structure is partitioned based on a binary tree structure and a horizontal/vertical splitting direction flag indicating a splitting direction; and a process of extracting information indicating a minimum size of partitioning based on the binary tree structure, from a bitstream, wherein in the case where a node of a size equal to the minimum size is further partitioned based on the binary tree structure, the horizontal/vertical splitting direction flag at the node is not entropy-decoded.

**Advantageous Effects of Invention**

According to the present invention, compression performance is improved, and the entropy encoding processing quantity and entropy decoding processing quantity are reduced.

**Brief Description of Drawings**

Fig. 1 is a block diagram depicting a video encoding device according to Exemplary Embodiment 1.
Fig. 2 is a flowchart depicting the operations of an entropy encoding controller and entropy encoder.
Fig. 3 is an explanatory diagram depicting a QTBT structure in Exemplary Embodiment 1.
Fig. 4 is a block diagram depicting a video decoding device according to Exemplary Embodiment 2.
Fig. 5 is a flowchart depicting the operations of an entropy decoding controller and entropy decoder.
Fig. 6 is a block diagram depicting an example of the structure of an information processing system capable of realizing the functions of a video encoding device.
Fig. 7 is a block diagram depicting main parts of a video encoding device.
Fig. 8 is a block diagram depicting main parts of a video decoding device.

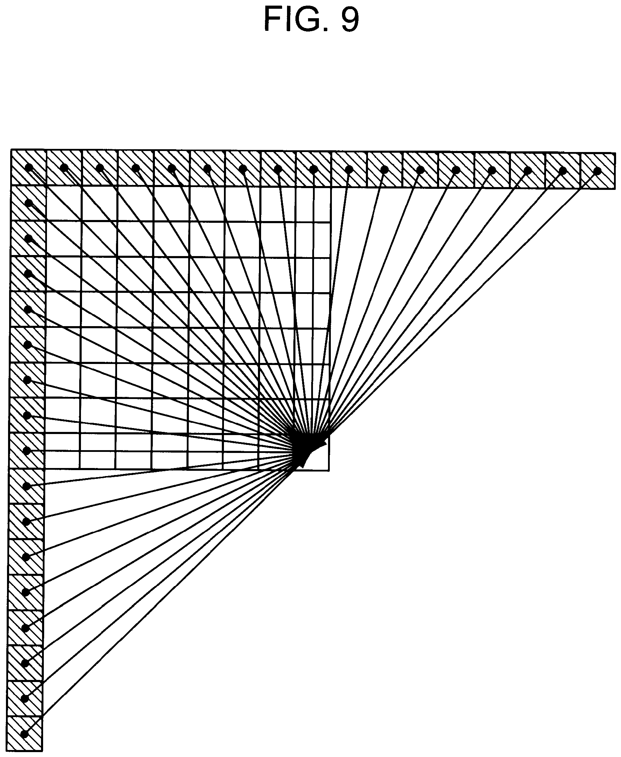

Fig. 9 is an explanatory diagram depicting an example of 33 types of angular intra prediction.
Fig. 10 is an explanatory diagram depicting an example of inter-frame prediction.
Fig. 11 is an explanatory diagram depicting an example of CTU partitioning of a frame t and an example of CU partitioning of CTU8 of the frame t.
Fig. 12 is an explanatory diagram depicting a quadtree structure corresponding to the example of CU partitioning of CTU8.
Fig. 13 is an explanatory diagram depicting examples of PU partitioning of a CU.
Fig. 14 is an explanatory diagram depicting examples of TU partitioning of a CU.
Fig. 15 is a block diagram depicting an example of the structure of a typical video encoding device.
Fig. 16 is a block diagram depicting an example of the structure of a typical video decoding device.
Fig. 17 is an explanatory diagram depicting an example of block partitioning of a CTU described in NON PATENT LITERATURE 2 and its tree structure.
Fig. 18 is an explanatory diagram depicting an example of block partitioning of a CTU based on a QTBT structure and its tree structure.

**Description of Embodiment**

**Exemplary Embodiment 1**

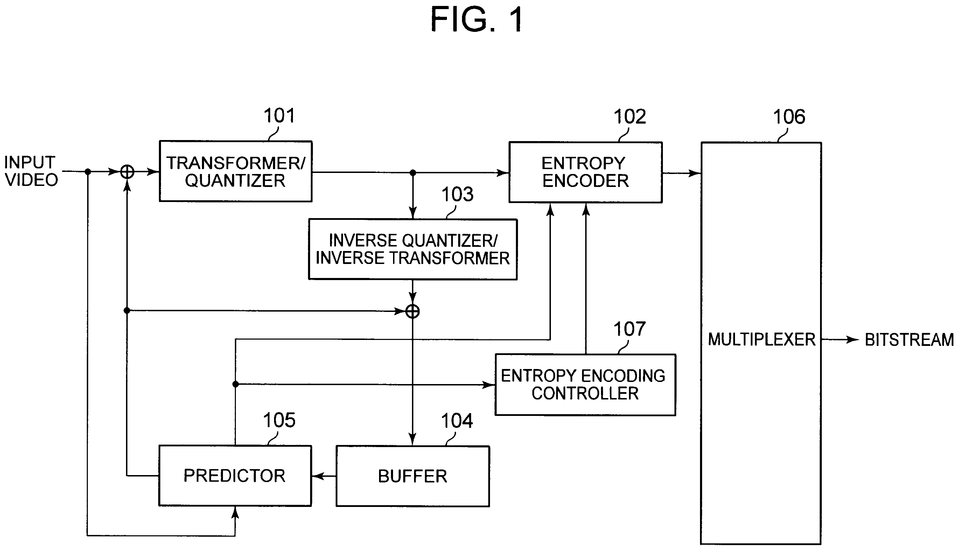

Fig. 1 is a block diagram depicting an exemplary embodiment (Exemplary Embodiment 1) of a video encoding device. The video encoding device depicted in Fig. 1 includes a transformer/quantizer 101, an entropy encoder 102, an inverse quantizer/inverse transformer 103, a buffer 104, a predictor 105, a multiplexer 106, and an entropy encoding controller 107.

The definitions of cu_split_flag, bt_split_flag, and bt_split_vertical flag used in this exemplary embodiment are as described above. In the case where bt_split_flag is not present, the video decoding side implicitly interprets bt_split_flag as 0. In this exemplary embodiment, bt_split_vertical_flag may not be present even when bt_split_flag is 1.

The predictor 105 determines, for each CTU, cu split flag, bt_split_flag, and bt_split_vertical_flag that minimize the coding cost. Incidentally, cu_split_flag, bt_split_ flag, and bt_split_vertical_flag determine a QTBT partitioning shape.

A block generated as a result of partitioning based on a quadtree structure or a binary tree structure is hereafter also referred to as "subblock".

The predictor 105 then determines pred_mode_flag for determining intra prediction/inter prediction, split_tu_flag for determining a TU partitioning shape, an intra prediction direction, and a motion vector, for each subblock generated by QTBT partitioning based on the determined cu_split_flag, bt_split_flag, and bt_split_vertical_flag. The pred_mode_flag, split_tu_flag, intra prediction direction and motion vector to be determined minimize the coding cost.

The predictor 105 then determines skip_flag for determining skip mode. In detail, in the case where, for the subblock to be processed, the determined pred_mode_flag indicates inter prediction and a transform quantization value is not present, the predictor 105 sets skip_flag to 1 (i.e. skip mode is set). Otherwise, the predictor 105 sets skip_flag to 0 (i.e. skip mode is not set).

The predictor 105 generates a prediction signal corresponding to the input image signal of each subblock, based on the determined cu_split_flag syntax value, bt_split_flag syntax value, bt_split_vertical_flag syntax value, skip_flag syntax value, pred mode_flag syntax value, split_tu_flag syntax value, intra prediction direction, and motion vector. The prediction signal is generated based on the above-mentioned intra prediction or inter-frame prediction.

The transformer/quantizer 101 frequency-transforms a prediction error image obtained by subtracting the prediction signal from the input image signal, based on the TU partitioning shape determined by the predictor 105. The transformer/quantizer 101 further quantizes the frequency-transformed prediction error image (frequency transform coefficient), to generate a transform quantization value.

The entropy encoding controller 107 monitors the size of each subblock based on the binary tree structure supplied from the predictor 105 to the entropy encoder 102, and determines whether or not to entropy-encode bt_split_vertical_flag.

In detail, in the case where the width or height of the subblock to be processed is equal to the minimum size, when further partitioning the block, the entropy encoding controller 107 causes the entropy encoder 102 to skip the entropy encoding process of bt_split_vertical_flag. The minimum size is hereafter denoted by minBTsize. The minimum size may be set to any size. In this exemplary embodiment, the minimum size is "8" as an example. The width and height of the subblock to be processed are respectively denoted by curPartW and curPartH.

The entropy encoder 102 entropy-encodes the cu split flag syntax value, the bt_split_flag syntax value, the bt_split_vertical_flag syntax value, the skip_flag syntax value, the pred_mode_flag syntax value, the split_tu_flag syntax value, the difference information of the intra prediction direction, the difference information of the motion vector which are determined by the predictor 105, and the transform quantization value.

Here, when the entropy encoding controller 107 determines to skip entropy-encoding bt_split_vertical_flag, the entropy encoder 102 skips entropy-encoding bt_split_vertical_flag.

By the above-mentioned control, redundant signaling of bt_split_vertical_flag is prevented.

The inverse quantizer/inverse transformer 103 inverse-quantizes the transform quantization value. The inverse quantizer/inverse transformer 103 further inverse-frequency-transforms the frequency transform coefficient obtained by the inverse quantization. The prediction signal is added to the reconstructed prediction error image obtained by the inverse frequency transform, and the result is supplied to the buffer 104. The buffer 104 stores the reconstructed image.

The multiplexer 106 multiplexes and outputs the entropy-encoded data supplied from the entropy encoder 102, as a bitstream. Here, the multiplexer 106 also multiplexes minBTsize indicating the minimum size of partitioning based on the binary tree structure, in the bitstream.

The video encoding device according to this exemplary embodiment generates a bitstream by the operation described above.

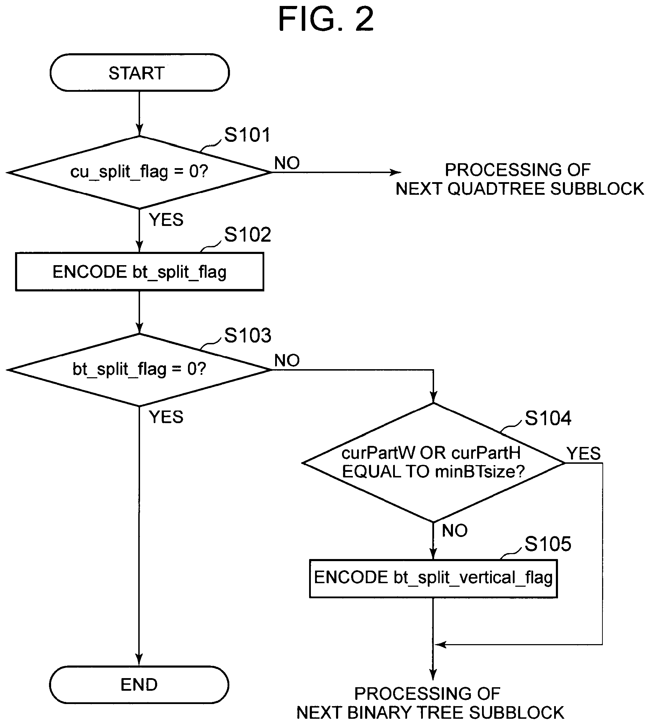

The following describes the operations of the entropy encoding controller 107 and entropy encoder 102, which are characteristic parts in this exemplary embodiment, for bt_split_flag, bt_split_vertical_flag, and skip_flag in more detail, with reference to a flowchart in Fig. 2.

In step S101, the entropy encoding controller 107 determines whether or not cu_split_flag is 0. In the case where cu split flag is 0, the process advances to step S102. In the case where cu_split_flag is 1, the process advances to processing the next quadtree subblock (block after partitioning based on the quadtree structure).

In step S102, the entropy encoder 102 entropy-encodes bt_split_flag. In step S103, the entropy encoding controller 107 determines whether or not bt_split_flag is 0. In the case where bt_split_flag is 0, the process ends. Before ending the process, the entropy encoder 102 entropy-encodes skip_flag. In the case where bt_split_flag is 1, the process advances to step S104.

In step S104, the entropy encoding controller 107 determines whether or not curPartW or curPartH is equal to minBTsize. When any of curPartW and curPartH is equal to minBTsize, the process advances to processing the next binary tree subblock (block after partitioning based on the binary tree structure). The processing of the next binary tree subblock corresponds to the process from step S102 onward. When neither curPartW nor curPartH is equal to minBTsize, the process advances to step S105.

In step S105, the entropy encoder 102 entropy-encodes bt_split_vertical_flag. The process then advances to processing the next binary tree subblock.

Through steps S103 to S105, the entropy encoding controller 107 skips the entropy encoding process of bt_split_vertical_flag in the case where bt_split_flag of the subblock to be processed is 1 (i.e. the block to be processed is further partitioned based on the binary tree structure) and any of curPartW and curPartH is equal to minBTsize.

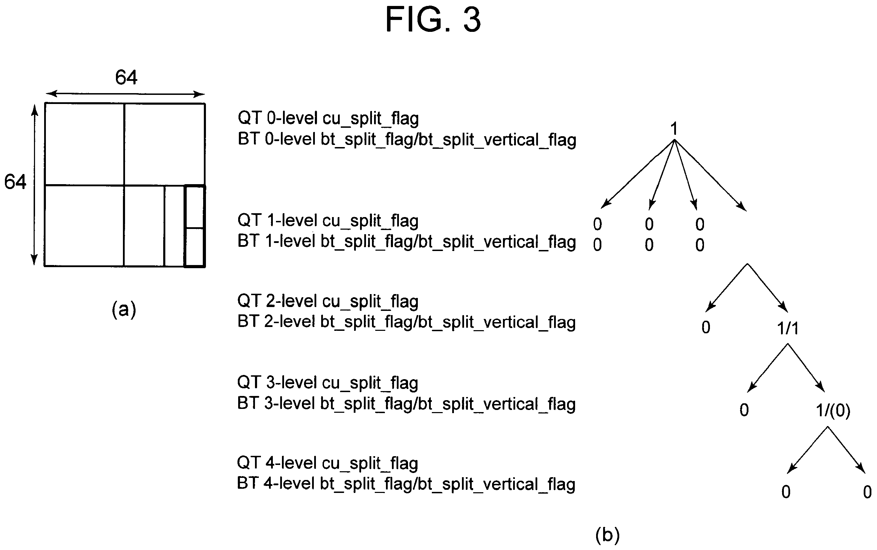

A specific example of this exemplary embodiment is described below. Fig. 3 is an explanatory diagram depicting a QTBT structure in Exemplary Embodiment 1.

An example of block partitioning is shown in (a) of Fig. 3. In (b) of Fig. 3, the syntax elements and QTBT structure, which correspond to the partitioning shown in (a) of Fig. 3, is shown.

In the example shown in (a) of Fig. 3, a 64 × 64 (64 pixels × 64 pixels) block is split into four 32 × 32 blocks (subblocks) based on the quadtree structure. Accordingly, at QT 0-level (depth 0), the cu_split_flag value indicates partitioning (1 in this exemplary embodiment).

At QT 1-level (depth 1), the lower right 32 × 32 block is split into two in the vertical direction. For the 32 × 32 block, the cu_split_flag value indicates non-partitioning (0 in this exemplary embodiment), but the bt_split_flag value at BT 1-level (depth 1) indicates partitioning (1 in this exemplary embodiment). Moreover, the bt_split_vertical_flag value indicates the vertical direction (1 in this exemplary embodiment).

At BT 2-level (depth 2), for the left 16 × 32 block included in the lower right 32 × 32 block, the bt split_flag value indicates non-partitioning (0 in this exemplary embodiment), as the block is subjected to no more partitioning.

For the right 16 × 32 block, the bt_split_flag value indicates partitioning (1 in this exemplary embodiment), as the block is subjected to further partitioning. The bt_split_vertical flag value indicates the vertical direction (1 in this exemplary embodiment). minBTsize is not reached by any of the width (curPartW), i.e. 16, and the height (curPartH), i.e. 32.

At BT 3-level (depth 3), for the left 8 × 32 block included in the lower right 16 × 32 block, the bt split_flag value indicates non-partitioning (0 in this exemplary embodiment), as the block is subjected to no more partitioning.

For the right 8 × 32 block (the block enclosed by the thick line in (a) of Fig. 3), the bt_split_flag value indicates partitioning (1 in this exemplary embodiment), as the block is subjected to further partitioning. Meanwhile, since curPartW is equal to minBTsize (= 8), bt_split_vertical flag is not entropy-encoded and transmitted.

At BT 4-level (depth 4), the upper 8 × 16 block and the lower 8 × 16 block included in the lower right 8 × 32 block are both not subjected to partitioning. Accordingly, for each of the blocks, the bt_split_flag value indicates non-partitioning (0 in this exemplary embodiment).

In the example depicted in (a) of Fig. 3, the 8 × 32 block enclosed by the thick line is further split in the horizontal direction based on the binary tree structure. In the system depicted in (b) of Fig. 18, bt_split_vertical flag with a value of 0 is entropy-encoded and included in the bitstream. However, curPartW is equal to minBTsize for the 8 × 32 block enclosed by the thick line, so that the splitting direction of the block is uniquely determined as the horizontal direction.

Therefore, even when no bt_split_vertical_flag syntax value is transmitted, merely by receiving information (e.g. bt_split_flag) about the 8 × 32 block whose curPartW is equal to minBTsize, the video decoding device can recognize the splitting direction of the 8 × 32 block. Hence, in this exemplary embodiment, the video encoding device does not entropy-encode the bt_split_vertical_flag syntax value in the case where a predetermined condition (specifically, bt_split_flag of the block to be processed is 1 and any of curPartW and curPartH is equal to minBTsize) is satisfied.

With the video encoding device using the above-mentioned entropy encoding controller 107 and entropy encoder 102 according to this exemplary embodiment, redundant transmission of the binary tree split direction flag is prevented to improve compression performance. Moreover, redundant entropy encoding processing of the binary tree split direction flag is reduced, and processing complexity is reduced.

The condition by the process of steps S103 and S104 is that, when the block to be processed is further partitioned based on the binary tree structure, the size of a block after the partitioning is less than minBTsize. This can be formulate as

$$\min(curPartW, curPartH)/(1 + bt\_split\_flag) < minBTsize,$$

where min(a, b) is a function that returns a smaller value of a and b.

## Exemplary Embodiment 2

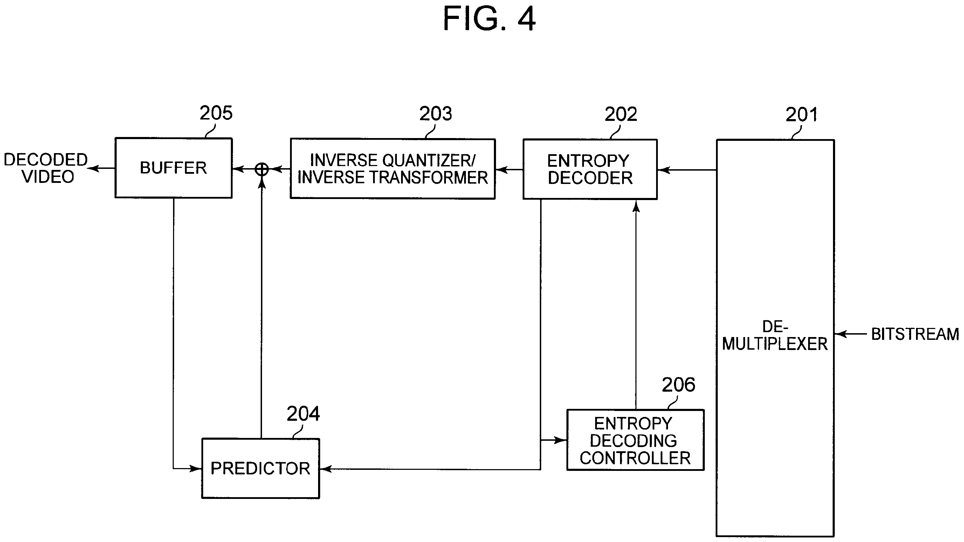

Fig. 4 is a block diagram depicting an exemplary embodiment (Exemplary Embodiment 2) of a video decoding device. The video decoding device depicted in Fig. 4 includes a de-multiplexer 201, an entropy decoder 202, an inverse quantizer/inverse transformer 203, a predictor 204, a buffer 205, and an entropy decoding controller 206.

The de-multiplexer 201 de-multiplexes an input bitstream to extract entropy-encoded data. Here, the de-multiplexer 201 also extracts minBTsize from the bitstream.

The entropy decoder 202 entropy-decodes the entropy-encoded data. The entropy decoder 202 supplies the entropy-decoded transform quantization value to the inverse quantizer/inverse transformer 203, and further supplies cu split flag, bt_split_flag, bt_split_vertical_flag, skip_flag, pred_mode_flag, split_tu_flag, intra prediction direction, and motion vector.

Here, if the same condition as the predetermined condition in the video encoding device is satisfied for bt_split_vertical_flag, the entropy decoder 202 in this exemplary embodiment skips the entropy decoding process.

The inverse quantizer/inverse transformer 203 inverse-quantizes the transform quantization value with a quantization step size. The inverse quantizer/inverse transformer 203 further inverse-frequency-transforms the frequency transform coefficient obtained by the inverse quantization.

The predictor 204 generates a prediction signal of each subblock, based on cu_split_flag, bt_split_flag, bt_split_vertical_flag, skip_flag, pred_mode_flag, split_tu_flag, intra prediction direction, and, motion vector. The prediction signal is generated based on the above-mentioned intra prediction or inter-frame prediction.

The prediction signal supplied from the predictor 204 is added to the reconstructed prediction error image obtained by the inverse frequency transform by the inverse quantizer/inverse transformer 203, and the result is supplied to the buffer 205 as a reconstructed picture. The reconstructed picture stored in the buffer 205 is then output as a decoded image.

The video decoding device according to this exemplary embodiment generates a decoded image by the operation described above.

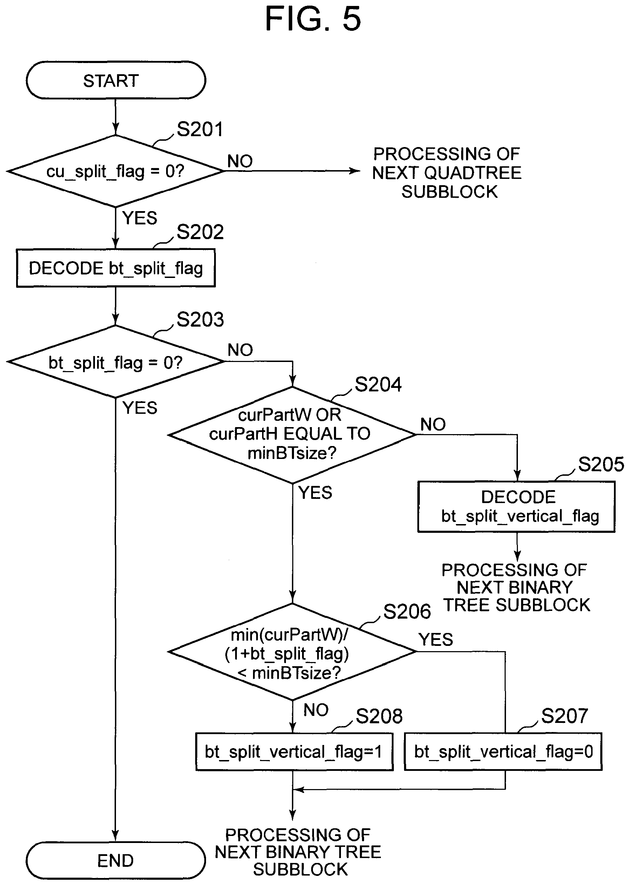

The following describes the operations of the entropy decoding controller 206 and entropy decoder 202, which are characteristic parts in this exemplary embodiment, for bt_split_flag and bt_split_vertical_flag in more detail, with reference to a flowchart in Fig. 5.

In step S201, the entropy decoding controller 206 determines whether or not entropy-decoded cu_split_flag is 0. In the case where cu_split_flag is 0, the process advances to step S202. In the case where cu_split_flag is 1, the process advances to processing the next quadtree subblock.

In step S202, the entropy decoder 202 entropy-decodes bt_split_flag. Following this, in step S203, the entropy decoding controller 206 determines whether or not entropy-decoded bt_split_flag is 0. In the case where bt_split_flag is 0, the process ends. Before ending the process, the entropy decoder 202 entropy-encodes skip_flag. In the case where bt_split_flag is 1, the process advances to step S204.

In step S204, the entropy decoding controller 206 determines whether or not curPartW or curPartH is equal to minBTsize. In the case where any of curPartW and curPartH is equal to minBTsize, the process advances to step S206. In other words, the entropy decoding controller 206 causes the entropy decoder 202 to skip the entropy decoding process of bt_split_vertical_flag. In the case where neither curPartW nor curPartH is equal to minBTsize, the process advances to step S205.

In step S205, the entropy decoder 202 entropy-decodes bt_split_vertical_flag of the subblock to be processed. The process then advances to processing the next binary tree subblock (block after partitioning based on the binary tree structure). The processing of the next binary tree subblock corresponds to the process from step S202 onward.

In steps S206 to S208, the entropy decoding controller 206 derives the bt_split_vertical flag value for which the entropy decoding process is skipped.

In detail, in step S206, the entropy decoding controller 206 determines whether or not min(curPartW)/(1 + bt_split_flag) < minBTsize. In the case where min(curPartW)/(1 + bt_split_flag) < minBTsize, the entropy decoding controller 206 sets the bt_split_vertical_flag value to 0 (indicating splitting in the horizontal direction) in step S207. In the case where min(curPartW)/(1 + bt_split_flag) $\geq$ minBTsize, the entropy decoding controller 206 sets the bt_split_vertical_flag value to 1 (indicating splitting in the vertical direction) in step S208. The process then advances to processing the next binary tree subblock (block after partitioning based on the binary tree structure).

min(curPartW)/(1 + bt_split_flag) < minBTsize is the condition that, when further splitting the subblock to be processed based on the binary tree structure, the width of a subblock after the splitting is less than minBTSize. Hence, the entropy decoding controller 206 may use a condition "min(curPartH)/(1 + bt_split_flag) < minBTsize" in step S206, to set the bt_split_vertical_flag value to 1 (indicating splitting in the vertical direction) in the case where min(curPartH)/(1 + bt_split_flag) < minBTsize and set the bt_split_vertical_flag value to 0 (indicating splitting in the horizontal direction) in the case where min(curPartH)/(1 + bt_split_flag) ≥ minBTsize.

The advantageous effects of this exemplary embodiment are described below. With the video decoding device using the above-mentioned entropy decoding controller 206 and entropy decoder 202 according to this exemplary embodiment, redundant entropy decoding of the binary tree split direction flag is prevented to reduce processing complexity.

The advantages of eliminating redundancy are as follows.

Redundant entropy encoding process and entropy decoding process of bt_split_vertical_flag in video encoding and video decoding can be reduced. Moreover, interoperability between video encoding and video decoding can be improved by preventing any error in combining parameter values.

Although Exemplary Embodiments 1 and 2 describe the case where minBTsize means both the minimum width and the minimum height, the minimum width and the minimum height may be set separately. In such a case, in step S104 in Fig. 2 and step S204 in Fig. 5, curPartW is compared with the minimum width, and curPartH is compared with the minimum height.

Each of the foregoing exemplary embodiments may be realized by hardware or a computer program.

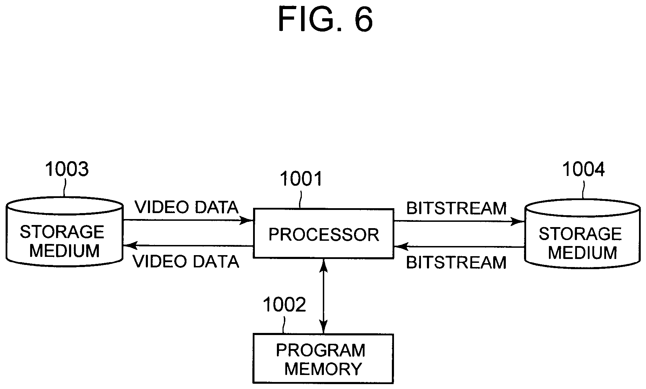

An information processing system depicted in Fig. 6 includes a processor 1001, a program memory 1002, a storage medium 1003 for storing video data, and a storage medium 1004 for storing a bitstream. The storage medium 1003 and the storage medium 1004 may be separate storage media, or storage areas included in the same storage medium. A magnetic storage medium such as a hard disk is available as a storage medium.

In the information processing system depicted in Fig. 6, a program for realizing the functions of the blocks (except the buffer block) depicted in each of Figs. 1 and 4 is stored in the program memory 1002. The processor 1001 realizes the functions of the video encoding device and video decoding device according to the foregoing exemplary embodiments, by executing processes according to the program stored in the program memory 1002.

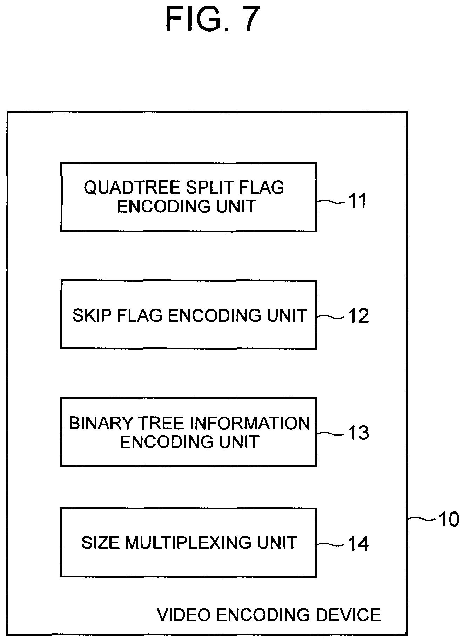

Fig. 7 is a block diagram depicting main parts of a video encoding device. As depicted in Fig. 7, a video encoding device 10 comprises: a quadtree split flag encoding unit 11 (realized by the entropy encoder 102 in the exemplary embodiment) for entropy-encoding a flag (e.g. cu_split_flag) indicating whether or not a block is partitioned based on a quadtree structure; a skip flag encoding unit 12 (realized by the entropy encoder 102 in the exemplary embodiment) for entropy-encoding a skip flag of an end node in a quadtree structure; a binary tree information encoding unit 13 (realized by the entropy encoder 102 in the exemplary embodiment) for entropy-encoding a flag (e.g. bt_split_flag) indicating whether or not a block of the end node in the quadtree structure is partitioned based on a binary tree structure and a horizontal/vertical splitting direction flag (e.g. bt_split_vertical_flag) indicating a splitting direction; and a size multiplexing unit 14 (realized by the multiplexer 106 in the exemplary embodiment) for multiplexing information (e.g. minBTsize) indicating a minimum size of partitioning based on the binary tree structure, in a bitstream, wherein in the case where a node of a size equal to the minimum size is further partitioned based on the binary tree structure, the binary tree information encoding unit 13 does not entropy-encode the horizontal/vertical splitting direction flag at the node.

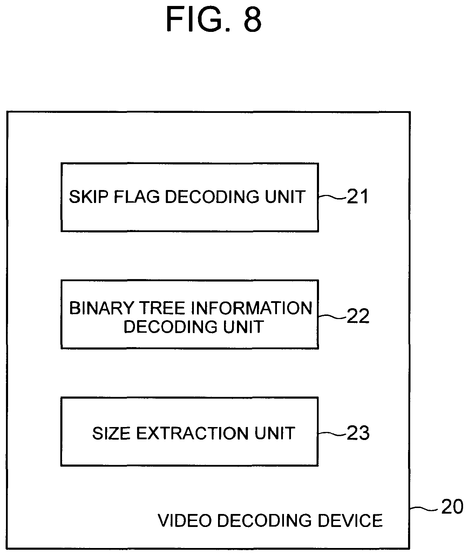

Fig. 8 is a block diagram depicting main parts of a video decoding device. As depicted in Fig. 8, a video decoding device 20 comprises: a skip flag decoding unit 21 (realized by the entropy decoder 202 in the exemplary embodiment) for entropy-decoding a skip flag of an end node in a quadtree structure; a binary tree information decoding unit 22 (realized by the entropy decoder 202 in the exemplary embodiment) for entropy-decoding a flag (e.g. bt_split_flag) indicating whether or not a block of the end node in the quadtree structure is partitioned based on a binary tree structure and a horizontal/vertical splitting direction flag (e.g. bt_split_vertical_flag) indicating a splitting direction; and a size extraction unit 23 (realized by the de-multiplexer 201 in the exemplary embodiment) for extracting information (e.g. minBTsize) indicating a minimum size of partitioning based on the binary tree structure, from a bitstream, wherein in the case where a node of a size equal to the minimum size is further partitioned based on the binary tree structure, the binary tree information decoding unit 22 does not entropy-decode the horizontal/vertical splitting direction flag at the node.

The video decoding device 20 may include a size setting unit (realized by the entropy decoding controller 206 in the exemplary embodiment) for setting a value meeting the minimum size, as a value of the horizontal/vertical splitting direction flag that is not entropy-decoded. The value meeting the minimum size is a value for specifying that partitioning into a subblock smaller than the minimum size is not performed (specifically, both the width and the height do not fall below the minimum value).

Although the present invention has been described with reference to the foregoing exemplary embodiments and examples, the present invention is not limited to the foregoing exemplary embodiments and examples. Various changes understandable by those skilled in the art can be made to the structures and details of the present invention within the scope of the present invention.

This application claims priority based on Japanese Patent Application No. 2016-251290 filed on December 26, 2016, the disclosure of which is incorporated herein in its entirety.

**Reference Signs List**

| | |
|---|---|
| 10 | video encoding device |
| 11 | quadtree split flag encoding unit |
| 12 | skip flag encoding unit |
| 13 | binary tree information encoding unit |
| 14 | size multiplexing unit |
| 20 | video decoding device |
| 21 | skip flag decoding unit |
| 22 | binary tree information decoding unit |
| 23 | size extraction unit |
| 101 | transformer/quantizer |
| 102 | entropy encoder |
| 103 | inverse quantizer/inverse transformer |
| 104 | buffer |
| 105 | predictor |
| 106 | multiplexer |
| 107 | entropy encoding controller |
| 201 | de-multiplexer |
| 202 | entropy decoder |
| 203 | inverse quantizer/inverse transformer |
| 204 | predictor |
| 205 | buffer |
| 206 | entropy decoding controller |
| 1001 | processor |
| 1002 | program memory |
| 1003 | storage medium |
| 1004 | storage medium |

**Claims**

1. A video encoding method using a block partitioning structure based on a quadtree and a binary tree, the video encoding method comprising:

    a step of entropy-encoding a flag indicating whether or not a block is partitioned based on a quadtree structure;
    a step of entropy-encoding a skip flag of an end node in a quadtree structure;
    a step of entropy-encoding a flag indicating whether or not a block of the end node in the quadtree structure is partitioned based on a binary tree structure and a horizontal/vertical splitting direction flag indicating a splitting direction; and
    a step of multiplexing information indicating a minimum size of partitioning based on the binary tree structure, in a bitstream,
    wherein in the case where a node of a size equal to the minimum size is further partitioned based on the binary tree structure, the horizontal/vertical splitting direction flag at the node is not entropy-encoded.

2. A video decoding method using a block partitioning structure based on a quadtree and a binary tree, the video decoding method comprising:

    a step of entropy-decoding a skip flag of an end node in a quadtree structure;
    a step of entropy-decoding a flag indicating whether or not a block of the end node in quadtree structure is partitioned based on a binary tree structure and a horizontal/vertical splitting direction flag indicating a splitting direction; and
    a step of extracting information indicating a minimum size of partitioning based on the binary tree structure, from a bitstream,

wherein in the case where a node of a size equal to the minimum size is further partitioned based on the binary tree structure, the horizontal/vertical splitting direction flag at the node is not entropy-decoded.

3. The video decoding method according to claim 2, wherein a value meeting the minimum size is set as a value of the horizontal/vertical splitting direction flag that is not entropy-decoded.

4. A video encoding device using a block partitioning structure based on a quadtree and a binary tree, the video encoding device comprising:

   quadtree split flag encoding means for entropy-encoding a flag indicating whether or not a block is partitioned based on a quadtree structure;
   skip flag encoding means for entropy-encoding a skip flag of an end node in a quadtree structure;
   binary tree information encoding means for entropy-encoding a flag indicating whether or not a block of the end node in the quadtree structure is partitioned based on a binary tree structure and a horizontal/vertical splitting direction flag indicating a splitting direction; and
   size multiplexing means for multiplexing information indicating a minimum size of partitioning based on the binary tree structure, in a bitstream,
   wherein in the case where a node of a size equal to the minimum size is further partitioned based on the binary tree structure, the binary tree information encoding means does not entropy-encode the horizontal/vertical splitting direction flag at the node.

5. A video decoding device using a block partitioning structure based on a quadtree and a binary tree, the video decoding device comprising:

   skip flag decoding means for entropy-decoding a skip flag of an end node in a quadtree structure;
   binary tree information decoding means for entropy-decoding a flag indicating whether or not a block of the end node in the quadtree structure is partitioned based on a binary tree structure and a horizontal/vertical splitting direction flag indicating a splitting direction; and
   size extraction means for extracting information indicating a minimum size of partitioning based on the binary tree structure, from a bitstream,
   wherein in the case where a node of a size equal to the minimum size is further partitioned based on the binary tree structure, the binary tree information decoding means does not entropy-decode the horizontal/vertical splitting direction flag at the node.

6. The video decoding device according to claim 5, comprising
   size setting means for setting a value meeting the minimum size, as a value of the horizontal/vertical splitting direction flag that is not entropy-decoded.

7. A video encoding program for executing a video encoding method using a block partitioning structure based on a quadtree and a binary tree, the video encoding program causing a computer to execute:

   a process of entropy-encoding a flag indicating whether or not a block is partitioned based on a quadtree structure;
   a process of entropy-encoding a skip flag of an end node in a quadtree structure;
   a process of entropy-encoding a flag indicating whether or not a block of the end node in the quadtree structure is partitioned based on a binary tree structure and a horizontal/vertical splitting direction flag indicating a splitting direction; and
   a process of multiplexing information indicating a minimum size of partitioning based on the binary tree structure, in a bitstream,
   wherein in the case where a node of a size equal to the minimum size is further partitioned based on the binary tree structure, the horizontal/vertical splitting direction flag at the node is not entropy-encoded.

8. A video decoding program for executing a video decoding method using a block partitioning structure based on a quadtree and a binary tree, the video decoding program causing a computer to execute:

   a process of entropy-decoding a skip flag of an end node in a quadtree structure;
   a process of entropy-decoding a flag indicating whether or not a block of the end node in the quadtree structure is partitioned based on a binary tree structure and a horizontal/vertical splitting direction flag indicating a splitting direction; and

a process of extracting information indicating a minimum size of partitioning based on the binary tree structure, from a bitstream,

wherein in the case where a node of a size equal to the minimum size is further partitioned based on the binary tree structure, the horizontal/vertical splitting direction flag at the node is not entropy-decoded.

9. The video decoding program according to claim 8, causing the computer to set a value meeting the minimum size, as a value of the horizontal/vertical splitting direction flag that is not entropy-decoded.

# FIG. 1

EP 3 562 154 A1

# FIG. 2

```
          START
            │
            ▼
     ┌──────────────┐  S101
     │ cu_split_flag │  NO          PROCESSING OF
     │     = 0?      │─────────▶  NEXT QUADTREE SUBBLOCK
     └──────────────┘
            │ YES
            ▼           S102
     ┌──────────────────┐
     │ ENCODE bt_split_flag │
     └──────────────────┘
            │
            ▼           S103
     ┌──────────────┐  NO
     │ bt_split_flag │─────────────────────┐
     │     = 0?      │                      │
     └──────────────┘                      ▼
            │ YES              ┌────────────────────────┐  S104
            │                  │ curPartW OR curPartH    │  YES
            │                  │ EQUAL TO minBTsize?     │────┐
            │                  └────────────────────────┘    │
            │                           │ NO                  │
            │                           ▼         S105        │
            │                  ┌──────────────────────────┐   │
            │                  │ ENCODE bt_split_vertical_flag │   │
            │                  └──────────────────────────┘   │
            ▼                           │◀──────────────────┘
          END                           ▼
                                PROCESSING OF
                           NEXT BINARY TREE SUBBLOCK
```

# FIG. 3

QT 0-level cu_split_flag
BT 0-level bt_split_flag/bt_split_vertical_flag

QT 1-level cu_split_flag
BT 1-level bt_split_flag/bt_split_vertical_flag

QT 2-level cu_split_flag
BT 2-level bt_split_flag/bt_split_vertical_flag

QT 3-level cu_split_flag
BT 3-level bt_split_flag/bt_split_vertical_flag

QT 4-level cu_split_flag
BT 4-level bt_split_flag/bt_split_vertical_flag

(a)

(b)

EP 3 562 154 A1

# FIG. 4

201 DE-MULTIPLEXER

BITSTREAM

202 ENTROPY DECODER

203 INVERSE QUANTIZER/ INVERSE TRANSFORMER

204 PREDICTOR

205 BUFFER

206 ENTROPY DECODING CONTROLLER

DECODED VIDEO

# FIG. 5

START

S201

cu_split_flag = 0?  —NO→  PROCESSING OF
NEXT QUADTREE
SUBBLOCK

YES

S202

DECODE bt_split_flag

S203

bt_split_flag = 0?  —NO→

YES

S204

curPartW OR
curPartH EQUAL TO
minBTsize?  —NO→

S205

DECODE
bt_split_vertical_flag

PROCESSING OF
NEXT BINARY
TREE SUBBLOCK

YES

S206

min(curPartW)/
(1+bt_split_flag)
< minBTsize?  —YES→

NO

S208

bt_split_vertical_flag=1

S207

bt_split_vertical_flag=0

PROCESSING OF
NEXT BINARY TREE
SUBBLOCK

END

# FIG. 6

# FIG. 7

```
┌──────────────────────────────────────────────┐
│                                                │
│   ┌──────────────────────────────┐             │
│   │   QUADTREE SPLIT FLAG        │             │
│   │   ENCODING UNIT              │─~11         │
│   └──────────────────────────────┘             │
│                                                │
│   ┌──────────────────────────────┐             │
│   │   SKIP FLAG ENCODING UNIT    │─~12         │
│   └──────────────────────────────┘             │
│                                                │
│   ┌──────────────────────────────┐             │
│   │   BINARY TREE INFORMATION    │─~13         │
│   │   ENCODING UNIT              │             │
│   └──────────────────────────────┘             │
│                                                 │─~10
│   ┌──────────────────────────────┐             │
│   │   SIZE MULTIPLEXING UNIT     │─~14         │
│   └──────────────────────────────┘             │
│                                                │
│                 VIDEO ENCODING DEVICE          │
└──────────────────────────────────────────────┘
```

# FIG. 8

SKIP FLAG DECODING UNIT ~21

BINARY TREE INFORMATION DECODING UNIT ~22

SIZE EXTRACTION UNIT ~23

VIDEO DECODING DEVICE ~20

# FIG. 9

# FIG. 10

INTER-FRAME PREDICTION BLOCK

$MV=(mv_x,mv_y)$

$mv_y$

$mv_x$

BLOCK TO BE ENCODED

(REFERENCE PICTURE)

(PICTURE TO BE ENCODED)

t-1        t        TIME

EP 3 562 154 A1

# FIG. 11

# FIG. 12

# FIG. 13

# FIG. 14

# FIG. 15

INPUT VIDEO → ⊕ → **TRANSFORMER/ QUANTIZER** (101) → ⊕ → **ENTROPY ENCODER** (102) → **MULTIPLEXER** (106) → BITSTREAM

**INVERSE QUANTIZER/ INVERSE TRANSFORMER** (103)

**PREDICTOR** (105) ← **BUFFER** (104)

EP 3 562 154 A1

# FIG. 16

DECODED VIDEO ← | BUFFER 205 | ← ⊕ ← | INVERSE QUANTIZER/ INVERSE TRANSFORMER 203 | ← | ENTROPY DECODER 202 | ← | DE-MULTIPLEXER 201 | ← BITSTREAM

PREDICTOR 204

EP 3 562 154 A1

# FIG. 17

(a)                                                            (b)

# FIG. 18

64

64

(a)

QT 0-level cu_split_flag
BT 0-level bt_split_flag/bt_split_vertical_flag

QT 1-level cu_split_flag
BT 1-level bt_split_flag/bt_split_vertical_flag

QT 2-level cu_split_flag
BT 2-level bt_split_flag/bt_split_vertical_flag

QT 3-level cu_split_flag
BT 3-level bt_split_flag/bt_split_vertical_flag

QT 4-level cu_split_flag
BT 4-level bt_split_flag/bt_split_vertical_flag

1

0    0    0    0
0    0    0    1/1

0    1/1

0    1/0

0    0

(b)

EP 3 562 154 A1

## INTERNATIONAL SEARCH REPORT

| International application No. |
| --- |
| PCT/JP2017/041084 |

A.   CLASSIFICATION OF SUBJECT MATTER

Int.Cl. H04N19/13(2014.01)i, H04N19/157(2014.01)i, H04N19/176(2014.01)i, H04N19/70(2014.01)i, H04N19/96(2014.01)i

According to International Patent Classification (IPC) or to both national classification and IPC

B.   FIELDS SEARCHED

Minimum documentation searched (classification system followed by classification symbols)
Int.Cl. H04N19/13, H04N19/157, H04N19/176, H04N19/70, H04N19/96

Documentation searched other than minimum documentation to the extent that such documents are included in the fields searched
Published examined utility model applications of Japan     1922–1996
Published unexamined utility model applications of Japan     1971–2017
Registered utility model specifications of Japan     1996–2017
Published registered utility model applications of Japan     1994–2017

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
| --- | --- | --- |
| Y | JOINT VIDEO EXPLORATION TEAM, JEM reference software [online], [retrieved on 19 December 2017] HM-16.6-JEM-4.0-dev, 19 November 2016, part of TEncSbac, TDecSbac, TEncCu.cpp, dated according to instruction manual JVET-D1001_v3 of JEM4.0 | 1–9 |
| Y | CHEN, J. L. et al., Algorithm description of joint exploration test model 4, JOINT VIDEO EXPLORATION TEAM (JVET) of ITU-T SG 16 WP 3 and ISO/IEC JTC 1/SC 29/WG 11 4th meeting: Chengdu, CN, 15–21 October 2016, JVET-D1001_v3, 19 November 2016, pp. 1–3 | 1–9 |

☒   Further documents are listed in the continuation of Box C.          ☐   See patent family annex.

| | |
| --- | --- |
| *   Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
| --- | --- |
| 20 December 2017 | 16 January 2018 |

| Name and mailing address of the ISA/ | Authorized officer |
| --- | --- |
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

| International application No. |
| --- |
| PCT/JP2017/041084 |

C (Continuation).    DOCUMENTS CONSIDERED TO BE RELEVANT

| Category* | Citation of document, with indication, where appropriate, of the relevant passages | Relevant to claim No. |
| --- | --- | --- |
| Y | HUANG, H. et al., EE2.1: Quadtree plus binary tree structure integration with JEM tools, JOINT VIDEO EXPLORATION TEAM (JVET) of ITU-T SG 16 WP 3 and ISO/IEC JTC 1/SC 29/WG 11 3rd meeting: Geneva, CH, 26 May to 1 June 2016, JVET-C0024, 26 May 2016 | 1-9 |
| Y | JP 2015-177294 A (MITSUBISHI ELECTRIC CORPORATION) 05 October 2015, (Family: none) | 1-9 |
| Y | SJBERG, R., TMuC text on max Cu size seems broken, Joint Collaborative Team on Video Coding (JCT-VC) of ITU-T SG16 WP3 and ISO/IEC JTC1/SC29/WG11 3rd Meeting: Guangzhou, CN, 7-15 October, 2010, JCTVC-C318, 12 September 2013 | 1-9 |
| A | WO 2016/203881 A1 (SHARP CORPORATION) 22 December 2016, entire text (Family: none) | 1-9 |
| A | JP 2012-135017 A (NTT DOCOMO, INC.) 12 July 2012, entire text & US 2006/0133680 A1 | 1-9 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016251290 A

**Non-patent literature cited in the description**

- *High Efficiency Video Coding (HEVC) text specification draft 10 (for FDIS & Last Call) of ITU-T SG16 WP3 and ISO/IEC JTC1/SC29/WG11 12th Meeting: Geneva,* 14 January 2013

- **JICHENG AN et al.** *Quadtree plus binary tree structure integration with JEM tools", JVET-B0023, Joint Video Exploration Team (JVET) of ITU-T SG 16 WP 3 and ISO/IEC JTC 1/SC 29/WG 11 2nd Meeting,* 20 February 2016